# EUROPÄISCHE PATENTANMELDUNG

(11) **EP 1 022 046 A1**
(43) Veröffentlichungstag der Anmeldung: **26.07.2000**
(21) Anmeldenummer: 99125606.6
(22) Anmeldetag: 22.12.1999
(51) Int. Cl.: B01D 53/14

(54) **Verfahren zur Entfernung von Kohlendioxid, Schwefelverbindungen, Wasser und aromatischen und höheren aliphatischen Kohlenwasserstoffen aus technischen Gasen**

(30) Priorität: 22.01.1999 DE 19902383; 22.09.1999 DE 19945326
(71) Anmelder: Krupp Uhde GmbH, 44141 Dortmund (DE)
(72) Erfinder: Menzel, Johannes, 46045 Oberhausen (DE); Tondorf, Oliver, 44143 Dortmund (DE)
(74) Vertreter: Rohmann, Michael, Dr.

(57) **Zusammenfassung**

Verfahren zur Entfernung von Kohlendioxid, Schwefelverbindungen, Wasser und aromatischen und höheren aliphatischen Kohlenwasserstoffen aus technischen Gasen. Das zu reinigende Gas wird durch Absorption bei erhöhtem Betriebsdruck von Sauergaskomponenten, Wasser und Kohlenwasserstoffen befreit. Als Absorbens wird zumindest ein Morpholinderivat eingesetzt. Mit absorbierten Komponenten beladenes Absorbens wird mit Hilfe eines Strippgases regeneriert. Das Strippgas wird durch Teilverdampfung des beladenen Absorbens erzeugt.

## Beschreibung

Die Erfindung betrifft ein Verfahren zur Entfernung von Kohlendioxid, Schwefelverbindungen, Wasser und aromatischen und höheren aliphatischen Kohlenwasserstoffen aus technischen Gasen. - Technische Gase meint dabei insbesondere Erdgas und/oder Roh-Synthesegas. Mit Schwefelverbindungen sind erfindungsgemäß insbesondere Schwefelwasserstoff sowie in Erdgas und Roh-Synthesegas vorhandene organische Schwefelverbindungen gemeint. Kohlendioxid und Schwefelwasserstoff gehören zu den im Erdgas und Roh-Synthesegas vorhandenen sogenannten Sauergaskomponenten. - Aus Erdgas müssen neben der Entfernung von Sauergaskomponenten wie Schwefelwasserstoff und Kohlendioxid insbesondere auch die im rohen Erdgas enthaltenen Wasserdampfanteile entfernt werden. Wenn das Erdgas außerdem auch aromatische Kohlenwasserstoffe und höhere aliphatische Kohlenwasserstoffe enthält, können diese zweckmäßigerweise durch Absorption an einem Absorbens als Wertstoff gewonnen werden. Dann ist grundsätzlich bei einer Regeneration des Absorbens dafür Sorge zu tragen, dass keine oder nur geringe Mengen dieser Kohlenwasserstoffkomponenten an die Umwelt abgegeben werden bzw. emittiert werden.

Grundsätzlich ist es bekannt, Schwefelwasserstoff und Kohlendioxid aus technischen Gasen, wie Erdgas und Synthesegas mit Hilfe chemischer Absorptionsmittel, beispielsweise mit Ethanolaminen, Alkalisalzlösungen und dergleichen zu entfernen. Bei Verwendung chemischer Waschmittel liegt das Absorbens in wässriger Lösung vor. Aus diesem Grunde ist im Anschluss an die Absorption von Schwefelwasserstoff und Kohlendioxid eine Trocknung des technischen Gases erforderlich. Vorzugsweise erfolgt diese Trocknung mit Hilfe einer Glykolwäsche oder durch Molsiebadsorption. Beispielsweise bei einer Trocknung in Glykol werden neben dem Wasser auch aromatische Kohlenwasserstoffe und höhere aliphatische Kohlenwasserstoffe teilweise aus dem Erdgas entfernt. Bei einer Regeneration der Waschlösung gelangen diese Kohlenwasserstoffe in nachteilhafter Weise in die Umgebung, was entsprechend den gesetzlichen Vorschriften nur bis zu gewissen Grenzen tolerierbar ist.

Aus US 3 773 896 ist die Verwendung von Morpholinderivaten als Absorptionsmittel für Schwefelwasserstoff und Kohlendioxid bekannt. Durch thermische Regenerierung des Absorptionsmittels bei einer Temperatur von 80°C können 70% bis 80% der absorbierten Schwefelverbindungen und 55% bis 65% des absorbierten Kohlendioxids aus dem Absorbens abgetrennt werden. Diese begrenzte Desorption der gelösten Gase aus dem beladenen Absorbens ist nachteilig, da die in Lösung bleibenden Gasanteile die Absorption von Kohlendioxid, Schwefelkomponenten und Wasser aus dem Rohgas behindern und niedrige Restkonzentrationen im gereinigten Gas nicht erlauben.

Aus DE 1 568 940 Al ist es fernerhin bekannt, dass Morpholinderivate eine hohe Affinität für aromatische Kohlenwasserstoffe besitzen und daher zur Entfernung dieser aromatischen Kohlenwasserstoffe aus dem Erdgas eingesetzt werden können.

Außerdem ist die Entfernung von Schwefelwasserstoff und Kohlendioxid aus technischen Gasen mittels physikalischer Absorptionsmittel wie beispielsweise Polyethylenglykoldimethylether, Propylencarbonat oder Methanol bekannt. Um die gelösten Sauergaskomponenten aus den physikalischen Waschflüssigkeiten wieder weitestgehend zu entfernen, ist fernerhin das Strippen der gelösten Gaskomponenten unter Verwendung von inerten Strippgasen, wie beispielsweise Stickstoff, bekannt. Das inerte Strippgas wird dabei in einer Desorptionskolonne im Gegenstrom zu dem mit den Sauergaskomponenten beladenen Absorbens geführt. Die gelösten Gaskomponenten werden dabei von dem inerten Gas aufgenommen und werden über den Kopf der Desorptionskolonne abgezogen.

Fernerhin ist es bekannt, Wasser zum Absorbens zuzusetzen, welches über eine indirekte Wärmezufuhr im Sumpf der Desorptionskolonne verdampft wird. Hierdurch wird die Strippdampfmenge erzeugt, die erforderlich ist, um die gelösten Gaskomponenten aus dem Absorbens auszutreiben. Dieses Verfahren wird insbesondere durchgeführt, um die Verdampfungstemperaturen im Sumpf des Desorbers niedrig zu halten, damit eine thermische Zersetzung des Absorbens aufgrund zu hoher Sumpftemperaturen vermieden wird. Wegen der vollständigen Mischbarkeit von Morpholinderivaten mit Wasser kann dieses Verfahren auch für die Entfernung von Sauergaskomponenten aus Morpholinderivaten genutzt werden. Dieses letztgenannte Verfahren weist jedoch den beachtlichen Nachteil auf, dass der Wasseranteil im Absorbens nicht zur Sauergasabsorption beiträgt und als Balastmenge mit im Absorbenskreislauf transportiert werden muss. Außerdem ist durch die Vorbeladung des Absorbens mit Wasser eine effektive Entfernung der Wasseranteile aus dem technischen Gas nicht möglich.

Im Lichte der vorstehend erläuterten Problematik liegt der Erfindung das technische Problem zugrunde, ein Verfahren der eingangs genannten Art anzugeben, mit dem einerseits eine vollständige Entfernung von insbesondere Sauergaskomponenten, Wasser und aromatischen und höheren aliphatischen Kohlenwasserstoffen mit Hilfe eines Absorbens möglich ist und mit dem andererseits eine möglichst vollständige Regenerierung des Absorbens bzw. eine möglichst vollständige Entfernung der genannten Komponenten aus dem Absorbens möglich ist.

Zur Lösung dieses technischen Problems lehrt die Erfindung ein Verfahren zur Entfernung von Kohlendioxid, Schwefelverbindungen, Wasser und Kohlenwasserstoffen aus technischen Gasen,
wobei das zu reinigende Gas durch Absorption bei erhöhtem Betriebsdruck von Sauergaskomponenten, Wasser und aromatischen und höheren aliphatischen Kohlenwasserstoffen befreit wird,
wobei als Absorbens zumindest ein Morpholinderivat eingesetzt wird,
wobei mit absorbierten Komponenten beladenes Absorbens mit Hilfe eines Strippgases regeneriert wird
und wobei das Strippgas durch Teilverdampfung des beladenen Absorbens erzeugt wird. - Es liegt im Rahmen der Erfindung, dass das Absorbens teilweise von den absorbierten Komponenten durch Druckabsenkung bzw. thermische Regeneration befreit wird. Es liegt fernerhin im Rahmen der Erfindung, dass das Strippgas durch Teilverdampfung des beladenen Absorbens im Unterdruck erzeugt wird.

Absorption bei erhöhtem Betriebsdruck meint im Rahmen der Erfindung, dass die Absorption über Normaldruck bzw. über 1 bar durchgeführt wird. Mit anderen Worten wird bevorzugt eine Absorptionskolonne mit einem Betriebsdruck oberhalb 1 bar betrieben. - Nach sehr bevorzugter Ausführungsform der Erfindung wird die Absorption bei einem Betriebsdruck von 10 bis 150 bar durchgeführt.

Nach einer bevorzugten Ausführungsform der Erfindung wird als Absorbens zumindest ein Morpholinderivat aus der Gruppe "N-Formylmorpholin, N-Acetylmorpholin, N-Propionylmorpholin, etc." eingesetzt. Es liegt im Rahmen der Erfindung, dass als Absorbens lediglich N-Formylmorpholin (NFM) oder lediglich N-Acetylmorpholin (NAM) verwendet wird. Nach sehr bevorzugter Ausführungsform wird als Absorbens eine Mischung von zwei Morpholinderivaten eingesetzt. Nach bevorzugter Ausführungsform, der im Rahmen der Erfindung besondere Bedeutung zukommt, wird als Absorbens eine Mischung aus N-Formylmorpholin (NFM) und N-Acetylmorpholin (NAM) verwendet. Das Mischungsverhältnis reicht, jeweils auf 100 Massenteile bezogen, von 10 bis 90 Massenteile NFM und 90 bis 10 Massenteil NAM. Nach einer bevorzugten Ausführungsform der Erfindung enthält das Absorbens 30 bis 70 Massenteile NFM und 70 bis 30 Massenteile NAM, jeweils zu 100 Massenteilen ergänzt. Das Absorbens kann außerdem auch 0,1 bis 5 Massenteile Wasser enthalten.

Nach sehr bevorzugter Ausführungsform der Erfindung wird das Absorbens mit einer Temperatur von -20°C bis +40°C in zumindest einem Absorber eingesetzt. Nach einer Ausführungsform der Erfindung wird die Absorption in dem zumindest einen Absorber bei einer Temperatur von -15°C bis +10°C durchgeführt. Nach einer anderen bevorzugten Ausführungsform der Erfindung wird die Absorption bei einer Temperatur von -20°C bis 0°C durchgeführt.

Gemäß einer sehr bevorzugten Ausführungsform der Erfindung werden Wasser und Kohlenwasserstoffe in einer separaten Absorptionsstufe absorbiert. Bei der separaten Absorptionsstufe handelt es sich zweckmäßigerweise um eine separate vorgeschaltete Absorptionskolonne. Es liegt jedoch auch im Rahmen der Erfindung, dass die separate Absorptionsstufe den unteren Teil einer Absorptionskolonne bildet, während in dem oberen Teil dieser Absorptionskolonne die Sauergaskomponenten absorbiert werden. Vorzugsweise wird die separate Absorptionsstufe zur Absorption von Wasser und Kohlenwasserstoffen bei einem Betriebsdruck von 10 bis 150 bar betrieben und zweckmäßigerweise wird als Absorbens eine Mischung von N-Formylmorpholin (NFM) und N-Acetylmorpholin (NAM) eingesetzt. Bevorzugt wird dabei das oben als vorteilhaft herausgestellte Mischungsverhältnis von NFM und NAM eingestellt. Es liegt im Rahmen der Erfindung, dass das Absorbens mit einer Temperatur von -20°C bis +40°C in der separaten Absorptionsstufe zur Absorption von Wasser und Kohlenwasserstoffen eingesetzt wird. Nach einer Ausführungsform beträgt die Temperatur -15°C bis +10°C. Vorzugsweise beträgt die Temperatur -20°C bis 0°C.

Nach bevorzugter Ausführungsform der Erfindung werden die Sauergaskomponenten in einer separaten Absorptionsstufe absorbiert. Vorzugsweise ist diese separate Absorptionsstufe zur Absorption der Sauergaskomponenten als der separaten Absorptionsstufe zur Absorption von Wasser und Kohlenwasserstoffen nachgeschaltete separate Absorptionskolonne ausgebildet. Es liegt jedoch auch im Rahmen der Erfindung, dass die separate Absorptionsstufe zur Absorption der Sauergaskomponenten als oberer Teil einer Absorptionskolonne ausgebildet ist und dass der untere Teil dieser Absorptionskolonne die separate Absorptionsstufe zur Absorption von Wasser und Kohlenwasserstoffen bildet. Zweckmäßigerweise wird die separate Absorptionsstufe zur Absorption der Sauergaskomponenten bzw. die entsprechende Absorptionskolonne bei einem Betriebsdruck von 10 bis 150 bar betrieben. Vorzugsweise wird als Absorbens eine Mischung aus N-Formylmorpholin (NFM) und N-Acetylmorpholin (NAM) eingesetzt, wobei bevorzugt das oben bereits erläuterte Mischungsverhältnis eingestellt wird. Es liegt im Rahmen der Erfindung, dass das Absorbens in der separaten Absorptionsstufe zur Absorption der Sauergaskomponenten mit einer Temperatur von -20°C bis +40°C eingesetzt wird. Nach einer Ausführungsform beträgt die Temperatur -15°C bis +10°C. Nach bevorzugter Ausführungsform beträgt die Temperatur -20°C bis 0°C.

Es liegt im Rahmen der Erfindung, dass die aus dem technischen Gas zu entfernenden Komponenten, nämlich Kohlendioxid, Schwefelverbindungen, Wasser, aromatische Kohlenwasserstoffe und höhere aliphatische Kohlenwasserstoffe möglichst vollständig von den Morpholinderivaten absorbiert werden. Das mit diesen absorbierten Komponenten beladene Absorbens wird dann mit Hilfe eines Strippgases regeneriert. Dazu wird das beladene Absorbens vorzugsweise vollständig oder als Teilstrom in einen Desorber bzw. in eine Desorptionskolonne eingeführt, wo erfindungsgemäß die Regeneration des beladenen Absorbens mit Hilfe des Strippgases bzw. Strippdampfes erfolgt. Das zur Regeneration des Absorbens erforderliche Strippgas wird erfindungsgemäß durch Teilverdampfung des aus der Absorption abgezogenen beladenen Absorbensstroms oder eines Absorbensteilstroms erzeugt. Nach bevorzugter Ausführungsform der Erfindung wird die Teilverdampfung des beladenen Absorbens bei einem Druck von 0,1 bis 0,7 bar (absolut) vorzugsweise bei einem Druck von 0,2 bis 0,4 bar (absolut) durchgeführt. Zweckmäßigerweise wird die Teilverdampfung im Sumpf einer Desorptionskolonne durchgeführt. Es liegt also im Rahmen der Erfindung, dass die Regeneration des Absorbens in dem Desorber bzw. in der Desorptionskolonne durch Teilverdampfung des Absorbens unter Unterdruck erzielt wird. Hierdurch werden im übrigen auch die Stabilität des Absorbens gefährdende unzulässig hohe Temperaturen vermieden. Der bei der Teilverdampfung entstehende dampfförmige Anteil des Absorbens dient als Strippmedium, mit dem gleichsam der flüssigförmige Anteil des Absorbens von den aus dem zu behandelnden technischen Gas absorbierten Komponenten wie Kohlendioxid, Schwefelwasserstoff, Wasser, aromatische Kohlenwasserstoffe und höhere aliphatische Kohlenwasserstoffe nahezu vollständig befreit wird. - Nach sehr bevorzugter Ausführungsform der Erfindung wird die Teilverdampfung des Absorbens im Sumpf einer Desorptionskolonne bei Unterdruck durchgeführt. Bei dieser Ausführungsform der Erfindung wird das Strippgas also im Sumpf der Desorptionskolonne bzw. im Desorbersumpf aus dem Absorbens erzeugt.

Der Erfindung liegt die Erkenntnis zugrunde, dass bei Durchführung des erfindungsgemäßen Verfahrens zum einen eine überraschend vollständige Entfernung von Sauergaskomponenten, Wasser und auch von aromatischen Kohlenwasserstoffen sowie von höheren aliphatischen Kohlenwasserstoffen problemlos möglich ist. Zum anderen ist auch eine überraschend vollständige Regenerierung des mit den genannten Komponenten beladenen Absorbens möglich, wenn nach dem Verfahren gemäß Patentanspruch 1 gearbeitet wird. Überraschenderweise wird das Absorbens dabei nahezu vollständig von den Sauergaskomponenten, Wasseranteilen und den Kohlenwasserstoffen befreit. Der Fachmann konnte nicht erwarten, dass eine so vollständige Regeneration des mit den mehreren Komponenten beladenen Absorbens möglich ist, wenn erfindungsgemäß das für die Regenerierung erforderliche Strippgas aus dem Absorbens durch Teilverdampfung erzeugt wird. Durch die erfindungsgemäße Teilverdampfung des Absorbens, bevorzugt im Desorbersumpf unter Unterdruck, wird der für die Regeneration benötigte Energieaufwand gegenüber einer eingangs beschriebenen bekannten Regeneration, bei der das Strippgas durch Verdampfung des dem Absorbens zugegebenen Wassers erzeugt wird, deutlich vermindert. Dies resultiert daher, dass die einem physikalisch wirkenden Absorbens zugegebene Wassermenge keinen Beitrag zur Absorption von Kohlendioxid und Schwefelkomponenten leistet, wodurch sich die im Kreis geführte Lösungsmittelmenge erhöht, was einen höheren Energiebedarf bzw. Energiekostenbedarf gegenüber dem erfindungsgemäßen Verfahren zur Folge hat. Der bei der erfindungsgemäßen Regeneration im Desorber aufzuwendende Energiebedarf für die Verdampfung der benötigten Strippgasmenge aus dem Absorbens ist im übrigen im Vergleich zu dem bekannten Verfahren deutlich geringer, da die Verdampfungswärme der Morpholinderivate nur 1/4 der Verdampfungswärme des Wassers beträgt.

Nach sehr bevorzugter Ausführungsform der Erfindung werden die aus dem Absorbens befreiten Gaskomponenten am Kopf des Desorbers bzw. der Desorptionskolonne abgezogen und werden Wasser und Kohlenwasserstoffe durch Partialkondensation der Gaskomponenten auskondensiert und wird eine wässrige flüssige Phase und eine kohlenwasserstoffhaltige flüssige Phase gewonnen. Kohlenwasserstoffhaltige flüssige Phase meint insbesondere eine flüssige Phase, die aromatische Kohlenwasserstoffe und höhere aliphatische Kohlenwasserstoffe enthält. Es liegt somit im Rahmen der Erfindung, dass durch Partialkondensation in einem Partialkondensator zwei separate flüssige Phasen gewonnen werden. Nach bevorzugter Ausführungsform wird ein Teil der wässrigen flüssigen Phase des Kondensates als Rücklauf auf den Kopf des Desorbers bzw. der Desorptionskolonne zur Absorbensrückgewinnung gegeben. Vorzugsweise wird ein Teilstrom der wässrigen flüssigen Phase, der mengenmäßig dem aus dem zu behandelnden Gasstrom absorbierten Wasser entspricht, ausgeschleust. Nach bevorzugter Ausführungsform der Erfindung wird die bei der Partialkondensation anfallende kohlenwasserstoffhaltige flüssige Phase, welche die aromatischen und die höheren aliphatischen Kohlenwasserstoffe enthält, als wertstoffhaltiges Produkt aus dem Prozess ausgeschleust.

Nach sehr bevorzugter Ausführungsform der Erfindung werden die aus dem Desorber abgezogenen Sauergaskomponenten auf den Betriebsdruck der Absorption verdichtet. Vorzugsweise werden die die Partialkondensation bzw. den Partialkondensator verlassenden Sauergaskomponenten in den Absorber zurückgeführt. Bei den Sauergaskomponenten handelt es sich insbesondere um Kohlendioxid, Schwefelkomponenten sowie restliche leichte Kohlenwasserstoffe. Die Sauergaskomponenten enthalten noch geringe Mengen an aromatischen und höheren aliphatischen Kohlenwasserstoffen. Zweckmäßigerweise wird der gesamte die Partialkondensation bzw. den Partialkondensator verlassende Sauergasstrom mit Hilfe eines Kompressors auf den Druck der Absorption verdichtet und in die Absorption zurückgeführt. Es liegt im Rahmen der Erfindung, dass dieser verdichtete Sauergasstrom in die separate Absorptionsstufe zur Absorption der Kohlenwasserstoffe eingeführt wird. Dabei werden auf effektive Weise die Restgehalte an aromatischen und höheren aliphatischen Kohlenwasserstoffen entfernt. Diese Ausführungsform zeichnet sich durch besondere Vorteile aus, da im Rahmen dieses erfindungsgemäßen Verfahrens eine nachteilhafte Emission der Kohlenwasserstoffe vollständig vermieden werden kann. - Alternativ kann der den Desorber verlassende, bevorzugt den Partialkondensator verlassende Sauergasstrom auch auf die Saugseite eines bei einer physikalischen Wäsche immer vorhandenen Recyclegaskompressors gefördert werden. Dabei wird der Sauergasstrom mit Hilfe des Recyclegaskompressors zusammen mit dem Recyclegasstrom zurück in die Absorption gefördert. Wenn ein Teil der Sauergaskomponenten, insbesondere für den Fall, dass Schwefelkomponenten getrennt von Kohlendioxid gewonnen werden sollen, bei der Regeneration ausgeschleust wird, besteht die Möglichkeit, die Sauergasfraktion über einen vor dem Desorber bzw. vor der Desorptionskolonne angeordneten Flashbehälter mit beliebig einzustellenden Druck- und Temperaturbedingungen auszuschleusen. Im Falle der getrennten Gewinnung von Kohlendioxid und Schwefelkomponenten liegt es im Rahmen der Erfindung, dass das Kohlendioxid dem nicht zum Desorber geführten Absorbensstrom durch Druckabsenkung in einer oder mehreren Stufen und/oder durch thermische Regeneration bei beliebig einzustellendem Druck entzogen wird.

Das erfindungsgemäß regenerierte Absorbens wird im Anschluss an die Regenerierung vorzugsweise gekühlt und anschließend in die Absorption zurückgeführt. Überraschenderweise ist es mit dem erfindungsgemäßen Verfahren möglich, Kohlendioxid, Schwefelkomponenten, Wasser, aromatische und höhere aliphatische Kohlenwasserstoffe aus dem zu behandelnden Gas nahezu vollständig zu entfernen. Schwefelwasserstoff kann dabei bis auf 1 ppmv, Kohlendioxid bis unter 10 ppmv und Wasser bis auf 1 ppmv aus dem Gas entfernt werden.

Nachfolgend wird die Erfindung anhand einer lediglich ein Ausführungsbeispiel darstellenden Zeichnung näher erläutert.

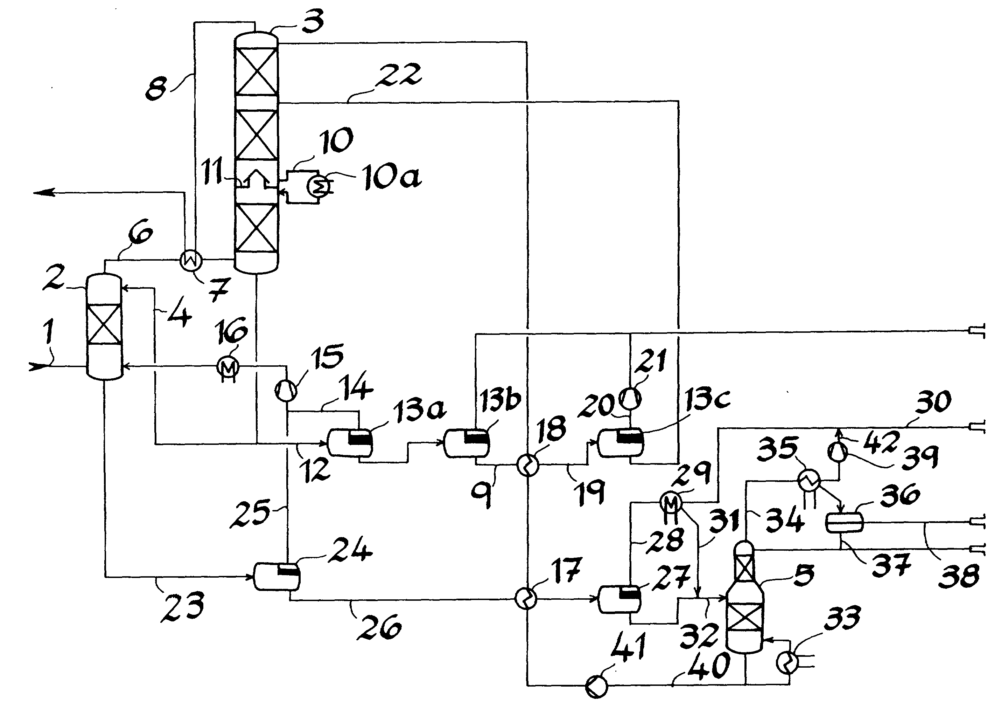

Die einzige Figur zeigt ein Schema einer Vorrichtung zur Durchführung des erfindungsgemäßen Verfahrens. Im Ausführungsbeispiel nach Figur 1 wird ein Rohgasstrom 1 eines technischen Gases, das insbesondere Kohlendioxid, Schwefelwasserstoff, organische Schwefelverbindungen, Wasserdampf sowie aromatische Kohlenwasserstoffe und höhere aliphatische Kohlenwasserstoffe enthält, in einen Absorber 2 eingeführt. Der Rohgasstrom 1 mag einen hohen Sauergasanteil mit beispielsweise 10 bis 90 Volumen-% Kohlendioxid aufweisen. Vorzugsweise und im Ausführungsbeispiel wird der zu reinigende Rohgasstrom 1 in den Sumpf des Absorbers 2 eingeleitet. In dem Absorber 2 werden im Gegenstrom die in dem Rohgasstrom 1 enthaltenen Wasseranteile, aromatischen und höheren aliphatischen Kohlenwasserstoffe und gegebenenfalls Schwefelkomponenten mittels eines Absorbens, das vorzugsweise aus einer Mischung von NFM und NAM besteht, absorbiert. Im Absorber 2 ist vorzugsweise ein Betriebsdruck von 10 bis 150 bar eingestellt. Im Ausführungsbeispiel ist der Absorber 2 als separate Absorptionsstufe bzw. Absorptionskolonne ausgebildet. Die Absorptionskolonne kann eine Füllkörperschüttung, eine strukturierte Packung aufweisen oder mit Böden ausgestattet sein. Die Absorption im Absorber 2 wird vorzugsweise bei einer Temperatur von -20°C bis +40°C durchgeführt. Dadurch wird der Rohgasstrom 1 im Absorber 2 in der Regel abgekühlt. Das Absorbens wird zweckmäßigerweise durch eine Leitung 4 am Kopf des Absorbers 2 zugeführt. Vorzugsweise und im Ausführungsbeispiel ist das Absorbens dabei ein Teilstrom des gesamten den Sumpf des unten weiter erläuterten Absorbers 3 verlassenden Absorbensstroms, der mit Kohlendioxid, Schwefelwasserstoff und anderen Schwefelkomponenten beladen ist. Dieser mit Sauergaskomponenten beladene Absorbensstrom wird im Absorber 2 außerdem mit Wasser und Kohlenwasserstoffen, insbesondere aromatischen und höheren aliphatischen Kohlenwasserstoffen, beladen. Der auf diese Weise beladene Absorbensstrom verlässt den Sumpf des Absorbers 2 und wird dem Desorber 5 zugeführt, in welchem die Regenerierung des Absorbens stattfindet. Das regenerierte Absorbens wird vorzugsweise in den weiter unten erläuterten Absorber 3 zurückgeführt.

Der den Absorber 2 verlassende Gasstrom 6, der von Wasser und Kohlenwasserstoff sowie gegebenenfalls auch von Schwefelkomponenten gereinigt ist, wird vorzugsweise zunächst mit Hilfe eines Wärmetauschers 7 gekühlt. Als Kühlmedium kann sowohl das den Absorber 3 verlassende gereinigte Gas 8 als auch das durch weiter unten erläuterte Druckabsenkung abgekühlte Absorbens 9 genutzt werden.

Der Gasstrom 6 wird dann in den Absorber 3 eingeführt und vorzugsweise bei einem Betriebsdruck von 10 bis 150 bar von den verbliebenen Sauergaskomponenten befreit. Der Absorber 3 ist vorzugsweise und im Ausführungsbeispiel als separate Absorptionsstufe bzw. Absorptionskolonne zur Absorption der Sauergaskomponenten ausgebildet. Die Absorptionskolonne kann eine Füllkörperschüttung oder eine strukturierte Packung aufweisen oder kann mit Böden ausgestattet sein. Als Absorbens wird in dem Absorber 3 eine Mischung aus NFM und NAM verwendet und die Absorption wird hier vorzugsweise bei einer Temperatur von -20°C bis +40°C durchgeführt. Das mit Sauergaskomponenten beladene Absorbens 12 wird aus dem Sumpf des Absorbers 3 abgezogen. Ein Teil dieses mit den Sauergaskomponenten beladenen Absorbens 12 wird in den Absorber 2 eingeführt und der verbleibende Teil wird durch nachfolgend noch erläuterte Druckabsenkung regeneriert und dem Absorber 3 im Mittelteil wieder zugeführt. - Um die Absorptionswärme des Absorbers 3 abzuführen sind ein oder mehrere Zwischenkühler 10a zur Kühlung der in der Absorptionskolonne ablaufenden Absorbenslösung vorgesehen. Das zu kühlende Absorbens wird als flüssiger Seitenstrom 10 auf einem Zwischenboden 11 des Absorbers 3 abgezogen, gekühlt und im Absorber 3 unterhalb des Zwischenbodens 11 wieder zugeführt. Das im Absorber 3 gereinigte Gas 8 wird im übrigen am Kopf des Absorbers 3 abgezogen.

Nach bevorzugter Ausführungsform und im Ausführungsbeispiel wird das mit den Sauergaskomponenten beladene und aus dem Sumpf des Absorbers 3 abgezogene Absorbens einer mehrstufigen Entspannung zugeführt, soweit es nicht in den Absorber 2 eingeführt wird. Die mehrstufige Entspannung wird zweckmäßigerweise in einer Anordnung aus mehreren in Reihe geschalteten Flashbehältern 13a, 13b, 13c durchgeführt und hier von den Sauergaskomponenten befreit und gleichzeitig abgekühlt. Vorzugsweise wird das beladene Absorbens 12 zunächst in einen Flashbehälter 13a eingeführt, dessen Betriebsdruck so ausgelegt ist, daß bei der Entspannung des beladenen Absorbens 12 in diesem Flashbehälter 13a eine hauptsächlich Kohlenwasserstoff enthaltende Gasphase 14 anfällt. Diese Gasphase 14 kann zweckmäßigerweise und im Ausführungsbeispiel mittels eines Verdichters 15 auf den Betriebsdruck des Absorbers 2 verdichtet werden und nach einer bevorzugten Kühlung im Wärmetauscher 16 in den Absorber 2 zurückgeführt werden. Vorzugsweise ist der Entspannungsdruck des zweiten Flashbehälters 13b so gewählt, dass eine starke Abkühlung des aus dem Flashbehälter 13a abgezogenen Absorbens 9 erfolgt. Bevorzugt wird das aus dem Flashbehälter 13b abgezogene Absorbens 9 zur Kühlung des zweckmäßigerweise im Absorbenswärmetauscher 17 bereits teilweise abgekühlten Absorbensstroms aus dem Desorber 5 verwendet. Diese letztgenannte Kühlung erfolgt in zumindest einem Wärmetauscher 18. Das den Wärmetauscher 18 verlassende vorgewärmte und teilbeladene Absorbens 19 wird vor Eintritt in den Absorber 3 zweckmäßigerweise in einem weiteren Flashbehälter 13c entspannt. Bei dieser Entspannung kühlt sich das Absorbens auf die für die Absorption im Absorber 3 erforderliche Betriebstemperatur ab und wird dabei fernerhin von den noch gelösten Sauergaskomponenten befreit. Diese Sauergaskomponenten werden bevorzugt über Kopf des Flashbehälters 13c als Sauergasstrom 20 abgezogen. Der Betriebsdruck im Flashbehälter 13c wird zweckmäßigerweise so gewählt, dass sich eine zur Erzielung der gewünschten Produktgasreinheit günstige Restbeladung des Absorbens mit Sauergaskomponenten einstellt. Der Betriebsdruck des Flashbehälters 13c liegt bevorzugt im Bereich von 0,3 bis 1,5 bar (absolut), sehr bevorzugt im Bereich von 0,4 bis 1,1 bar (absolut). Es liegt im Rahmen der Erfindung, dass ein im Flashbehälter 13c gegebenenfalls notwendiger Unterdruck durch einen Verdichter 21 erzeugt wird, der den den Flashbehälter 13c verlassenden Gasstrom 20 auf einen erforderlichen Abgabedruck des Sauergases verdichtet. - Das den Flashbehälter 13c verlassende regenerierte und abgekühlte Absorbens wird vorzugsweise über eine Leitung 22 dem Mittelteil des Absorbers 3 zugeführt, wo das Absorbens erneut für die Entfernung der Sauergaskomponenten aus dem Gasstrom 6 zur Verfügung steht.

Das den Absorber 2 verlassende beladene Absorbens 23 wird vorzugsweise zunächst in einen Flashbehälter 24 eingeführt, dessen Betriebsdruck zweckmäßigerweise so ausgelegt ist, dass bei der hier stattfindenden Entspannung des beladenen Absorbens 23 eine hauptsächlich Kohlenwasserstoffe enthaltende Gasphase 25 anfällt. Diese Gasphase 25 wird bevorzugt mit Hilfe des Verdichters 15 auf den Betriebsdruck des Absorbers 2 verdichtet und vorzugsweise nach einer Kühlung in einem Wärmetauscher 16 in den Absorber 2 zurückgeführt. Das Absorbens 26 wird aus dem Flashbehälter 24 abgezogen, vorzugsweise im Absorbenswärmetauscher 17 erwärmt und anschließend zweckmäßigerweise einem Flashbehälter 27 zugeführt. Der Flashbehälter 27 wird bevorzugt mit erhöhtem, maximal dem Betriebsdruck des Absorbers 2 entsprechendem Druck betrieben. Der in diesem Flashbehälter 27 eingestellte Druck ist vorzugsweise nur wenig niedriger als der Betriebsdruck des Absorbers 2. Ein besonders effektive Abtrennung der gelösten Sauergase wird bei einer intensiven Vorwärmung des beladenen Absorbens 26 erreicht. Dadurch kann der größte Teil des in dem beladenen Absorbens 26 gelösten Sauergases bei einem Druck, der dem Betriebsdruck des Absorbers 2 entspricht oder vorzugsweise nur geringfügig kleiner ist, geflasht werden. Zweckmäßigerweise wird der den Flashbehälter 27 verlassende Sauergasstrom 28 in einem Kühler 29 abgekühlt und als Sauergasstrom 30 ausgeschleust. Das in dem Sauergasstrom 28 noch vorhandene dampfförmige Lösungsmittel sowie aromatische und höhere aliphatische Kohlenwasserstoffe werden vorzugsweise auskondensiert und als Kondensatstrom 31 vor den Desorber 5 zurückgeführt. Das mit Sauergaskomponenten restbeladene Absorbens 32 wird zur Regenerierung in den Desorber 5 eingeführt, wo es vorzugsweise auf einen niedrigeren Druck entspannt wird. Der Desorber 5 wird bevorzugt bei einem Unterdruck von 0,1 bis 0,7 bar (absolut), sehr bevorzugt 0,2 bis 0,4 bar (absolut) betrieben. Die Regenerierung erfolgt hier durch Strippen mit Strippgas, das durch Teilverdampfung des Absorbens erzeugt wird. Dabei werden die restlichen Sauergaskomponenten freigesetzt.

Für die Desorption bzw. als Desorber 5 wird vorzugsweise eine Desorptionskolonne verwendet, die eine Füllkörperschüttung oder eine strukturierte Packung aufweisen kann oder mit Böden ausgestattet ist. In einem Reboiler 33 wird indirekt mit Hilfe von Dampf oder einem anderen geeigneten Wärmeträger erreicht, dass das Absorbens thermisch durch Strippen mit Strippgas bzw. mit Absorbensdämpfen regeneriert wird. Am Kopf des Desorbers 5 wird eine sauergasreiche Dampfphase 34 abgezogen und bevorzugt in einem Partialkondensator 35 gekühlt. Dabei werden die in der Dampfphase 34 enthaltenen aromatischen und höheren aliphatischen Kohlenwasserstoffe und das Wasser auskondensiert. Es bilden sich somit eine separate wässrige flüssige Phase sowie eine separate kohlenwasserstoffhaltige flüssige Phase. Beide Fraktionen können mit Hilfe des Behälters 36 voneinander getrennt werden. Ein Teil der wässrigen Phase 37 wird als Rücklauf auf den Kopf des Desorbers 5 zurückgeführt. Ein anderer Teil der wässrigen Phase 37, der der Menge des aus dem Rohgasstrom 1 entfernten Wassers entspricht, wird aus dem Prozess ausgeschleust. Die kohlenwasserstoffhaltige Phase wird als Produktstrom 38 ebenfalls aus dem Prozess ausgeschleust. Die den Partialkondensator 35 verlassenden, nicht kondensierten Gaskomponenten, wie Kohlendioxid, Schwefelkomponenten und leichte Kohlenwasserstoffe, werden mit Hilfe eines Verdichters 39 auf einen Abgabedruck verdichtet und verlassen den Prozess als Sauergasstrom 30.

Die von den gelösten Sauergaskomponenten fast vollständig befreite Absorbenslösung 40 wird am Sumpf des Desorbers 5 abgezogen und vorzugsweise mit einer Kreislaufpumpe 41 zum Kopf des Absorbers 3 zurückgeführt. Zweckmäßigerweise wird die Wärme der heißen regenerierten Lösung 40 mittels eines Absorbenswärmetauschers 17 an das beladene Absorbens 26 übertragen. Vor Eintritt in den Absorber 3 wird das regenerierte Absorbens bevorzugt mit Hilfe eines Wärmetauschers 18 auf eine bevorzugte Absorptionstemperatur von -20°C bis +40°C gebracht. Dann steht das regenerierte und gekühlte Absorbens für eine erneute Entfernung von Sauergaskomponenten im Absorber 3 zur Verfügung.

Der Sauergasstrom 30, der neben Kohlendioxid, Schwefelverbindungen und Wasser auch geringe Anteile an aromatischen und höheren aliphatischen Kohlenwasserstoffen enthalten kann, wird alternativ dem den Flashbehälter 13a verlassenden Gasstrom 14 zugeführt. Auf diese Weise werden die in dem Sauergasstrom 30 enthaltenen Stoffe nicht aus dem Prozess ausgeschleust sondern zu dem Absorber 2 zurückgeführt. Durch die Entfernung von aromatischen Kohlenwasserstoffen und höheren aliphatischen Kohlenwasserstoffen in diesem Absorber 2 wird somit eine nachteilhafte Emission dieser Kohlenwasserstoffe verhindert. - Es liegt auch im Rahmen der Erfindung, statt des gesamten Sauergasstromes 30 lediglich den aus dem Partialkondensator 35 stammenden Sauergasstrom 42 dem den Flashbehälter 13a verlassenden Gasstrom 14 zuzuführen. Auch auf diese Weise wird die nachteilhafte Emission von aromatischen und höheren aliphatischen Kohlenwasserstoffen wirksam verhindert.

## Patentansprüche

1. Verfahren zur Entfernung von Kohlendioxid, Schwefelverbindungen, Wasser und aromatischen und höheren aliphatischen Kohlenwasserstoffen aus technischen Gasen,
wobei das zu reinigende Gas durch Absorption bei erhöhtem Betriebsdruck von Sauergaskomponenten, Wasser und Kohlenwasserstoffen befreit wird,
wobei als Absorbens zumindest ein Morpholinderivat eingesetzt wird,
wobei mit absorbierten Komponenten beladenes Absorbens mit Hilfe eines Strippgases regeneriert wird
und wobei das Strippgas durch Teilverdampfung des beladenen Absorbens erzeugt wird.

2. Verfahren nach Anspruch 1, wobei die Absorption bei einem Betriebsdruck von 10 bis 150 bar durchgeführt wird.

3. Verfahren nach einem der Ansprüche 1 oder 2, wobei als Absorbens eine Mischung von zumindest zwei Morpholinderivaten eingesetzt wird.

4. Verfahren nach Anspruch 3, wobei als Absorbens eine Mischung aus N-Formylmorpholin (NFM) und N-Acetylmorpholin (NAM) eingesetzt wird.

5. Verfahren nach einem der Ansprüche 1 bis 4, wobei das Absorbens mit einer Temperatur von -20°C bis +40°C in zumindest einem Absorber eingesetzt wird.

6. Verfahren nach einem der Ansprüche 1 bis 5, wobei Wasser und Kohlenwasserstoffe in einer separaten Absorptionsstufe absorbiert werden.

7. Verfahren nach einem der Ansprüche 1 bis 6, wobei die Sauergaskomponenten in einer separaten Absorptionsstufe absorbiert werden.

8. Verfahren nach einem der Ansprüche 1 bis 7, wobei die Teilverdampfung des beladenen Absorbens bei einem Druck von 0,1 bis 0,7 bar (absolut), vorzugsweise bei einem Druck von 0,2 bis 0,4 bar (absolut), durchgeführt wird.

9. Verfahren nach einem der Ansprüche 1 bis 8, wobei die Teilverdampfung des Absorbens im Sumpf einer Desorptionskolonne bei Unterdruck durchgeführt wird.

10. Verfahren nach einem der Ansprüche 1 bis 9, wobei aus dem Absorbens befreite Gaskomponenten am Kopf des Desorbers abgezogen werden, wobei Wasser und Kohlenwasserstoffe durch Partialkondensation dieser Gaskomponenten auskondensiert werden, wobei eine wässrige flüssige Phase sowie eine kohlenwasserstoffhaltige flüssige Phase gewonnen wird.

11. Verfahren nach Anspruch 10, wobei ein Teil der wässrigen Phase als Rücklauf auf den Kopf der Desorptionskolonne zurückgeführt wird.

12. Verfahren nach einem der Ansprüche 1 bis 11, wobei die aus dem Desorber abgezogenen Sauergaskomponenten auf den Betriebsdruck der Absorption verdichtet werden und in einen Absorber zurückgeführt werden.
